# EUROPEAN PATENT APPLICATION

(11) **EP 4 814 619 A1**
(43) Date of publication of application: **30.09.2026**
(21) Application number: 25188445.8
(22) Date of filing: 09.07.2025
(51) Int. Cl.: G03G 21/20, B01D 46/00, B01D 46/10, G03G 15/08

(54) **FOREIGN MATTER CAPTURING SYSTEM AND IMAGE FORMING APPARATUS**

(30) Priority: 24.03.2025 JP 2025049115
(71) Applicant: FUJIFILM Business Innovation Corp., Minato-ku Tokyo (JP)
(72) Inventor: NAKAYA, Narumi, Yokohama-shi, Kanagawa (JP); MATSUOKA, Tatsuro, Yokohama-shi, Kanagawa (JP); ISHII, Kazunari, Yokohama-shi, Kanagawa (JP); NOMURA, Yuka, Yokohama-shi, Kanagawa (JP); ITAKURA, Maho, Yokohama-shi, Kanagawa (JP); OGAWA, Natsuki, Yokohama-shi, Kanagawa (JP)
(74) Representative: Becker Kurig & Partner Patentanwälte mbB

(57) **Abstract**

A foreign matter capturing system includes a filter that is arranged in a gas flow passage in which a gas flows and that captures a foreign matter from the flowing gas, a guide member that is arranged in the gas flow passage on an upstream side in a flow direction of the gas with respect to the filter and that guides a gas to one side portion of the filter in an intersection direction intersecting the flow direction of the gas, and a moving member that is capable of moving the filter such that an upstream portion of a flow passage portion, in which the gas flows from the one side portion toward the other side portion of the filter, in the flow direction of the gas is wider than a downstream portion.

## Description

### BACKGROUND OF THE INVENTION

### (i) Field of the Invention

The present invention relates to a foreign matter capturing system and an image forming apparatus.

### (ii) Description of Related Art

A toner dust collecting apparatus described in JP2020-173316A includes a housing that has an intake port and a discharge port and a fan device that is supported in a shaken state by the housing and that forms, inside the housing, an airflow from the intake port toward the discharge port. In addition, the toner dust collecting apparatus includes a filter that is arranged inside the housing, that is supported by at least one of the housing or the fan device, and that collects a toner contained in air flowing into the housing from the intake port. Then, in the toner dust collecting apparatus, the shake of the fan device driven in order to form the airflow is transmitted to the filter and vibrates the filter.

### SUMMARY OF THE INVENTION

There is a foreign matter capturing system in which the filter that captures a foreign matter from a flowing gas is arranged in a gas flow passage in which the gas flows.

In the related art, the gas flow passage is formed such that a gas hits the entire filter without changing a flow direction of a gas. In such a configuration, the amount of foreign matter captured by a central portion of the filter is larger than the amount of foreign matter captured in a peripheral portion of the filter. That is, the position of the foreign matter captured by the filter is biased.

An object of the present disclosure is to suppress bias of a position of a foreign matter captured by a filter compared to a case where a gas flow passage is formed such that a gas hits the entire filter without changing a flow direction of a gas.

According to a first aspect of the present disclosure, there is provided a foreign matter capturing system including a filter that is arranged in a gas flow passage in which a gas flows and that captures a foreign matter from the flowing gas, a guide member that is arranged in the gas flow passage on an upstream side in a flow direction of the gas with respect to the filter and that guides a gas to one side portion of the filter in an intersection direction intersecting the flow direction of the gas, and a moving member that is capable of moving the filter such that an upstream portion of a flow passage portion, in which the gas flows from the one side portion toward the other side portion of the filter, in the flow direction of the gas is wider than a downstream portion.

The foreign matter capturing system according to a second aspect of the present disclosure may be the foreign matter capturing system according to the first aspect, in which the moving member is an elastic member that is capable of elastically deforming in the flow direction of a gas.

The foreign matter capturing system according to a third aspect of the present disclosure may be the foreign matter capturing system according to the first or second aspect, in which a guide surface that guides the gas to the one side portion of the filter by being inclined with respect to the flow direction of the gas is formed at a portion of the guide member on the upstream side in the flow direction of the gas.

The foreign matter capturing system according to a fourth aspect of the present disclosure may be the foreign matter capturing system according to any one of the first to third aspects, in which another guide surface that guides the gas from the one side portion of the filter toward the other side portion by being inclined with respect to the intersection direction is formed at a portion of the guide member on a downstream side in the flow direction of the gas.

The foreign matter capturing system according to a fifth aspect of the present disclosure may be the foreign matter capturing system according to any one of the first to fourth aspects, in which a detection unit that detects movement of the other side portion of the filter and a notification unit that issues a notification of replacement of the filter based on a detection result in which the movement is detected by at least the detection unit is further included.

The foreign matter capturing system according to a sixth aspect of the present disclosure may be the foreign matter capturing system according the fifth aspect, in which another detection unit that detects movement of the one side portion of the filter is further included, and the notification unit issues the notification of replacement of the filter based on the detection result in which the movement is detected by the detection unit and a detection result in which the movement is detected by the other detection unit.

According to a seventh aspect of the present disclosure, there is provided an image forming apparatus including an image forming unit that forms an image on a transported recording medium and the foreign matter capturing system according to any one of the first to sixth aspects that captures a foreign matter from a gas flowing from the image forming unit.

In the foreign matter capturing system according to the first aspect of the present disclosure, bias of the position of the foreign matter captured by the filter can be suppressed compared to a case where the gas flow passage is formed such that the gas hits the entire filter without changing the flow direction of a gas.

In the foreign matter capturing system according to the second aspect of the present disclosure, the filter can be moved such that then the upstream portion of the flow passage portion in the flow direction of a gas is wider than the downstream portion without applying a rotational force to the filter.

In the foreign matter capturing system according to the third aspect of the present disclosure, a large amount of gas can be guided to the one side portion of the filter compared to a case where the portion of the guide member on the upstream side in the flow direction of a gas is aligned with the flow direction of a gas.

In the foreign matter capturing system according to the fourth aspect of the present disclosure, a large amount of gas can be guided from the one side portion to the other side portion of the filter compared to a case where the portion of the guide member on the downstream side in the flow direction of a gas is aligned with the intersection direction.

In the foreign matter capturing system according to the fifth aspect of the present disclosure, a time for replacing the filter can be notified after the foreign matter is captured by the one side portion and the other side portion of the filter.

In the foreign matter capturing system according to the sixth aspect of the present disclosure, a time for replacing the filter can be accurately notified compared to a case where the time for replacing the filter is notified based on only movement of the other side portion of the filter.

In the image forming apparatus according to the seventh aspect of the present disclosure, the amount of foreign matter removed from the inside of the housing by one filter can be increased compared to a case where the foreign matter capturing system in which the gas flow passage is formed such that a gas hits the entire filter without changing the flow direction is included.

### BRIEF DESCRIPTION OF THE DRAWINGS

Exemplary embodiment(s) of the present invention will be described in detail based on the following figures, wherein:
Fig. 1 is a schematic configuration view showing an image forming apparatus according to a first exemplary embodiment of the present disclosure;
Fig. 2 is a configuration view showing a toner image forming unit included in the image forming apparatus according to the first exemplary embodiment of the present disclosure;
Fig. 3 is a configuration view showing a foreign matter capturing system according to the first exemplary embodiment of the present disclosure;
Fig. 4 is an explanatory view showing a flow direction of air and a state where a foreign matter is captured in one side portion of the filter in a foreign matter capturing system according to the first exemplary embodiment of the present disclosure;
Fig. 5 is an explanatory view showing the flow direction of air and an inclination state of the filter in the foreign matter capturing system according to the first exemplary embodiment of the present disclosure;
Fig. 6 is an explanatory view showing the flow direction of air and a state where the foreign matter is captured in the other side portion of the filter in the foreign matter capturing system according to the first exemplary embodiment of the present disclosure;
Fig. 7 is an explanatory view showing the flow direction of air and a pressed state of the filter in the foreign matter capturing system according to the first exemplary embodiment of the present disclosure;
Fig. 8 is a configuration view showing a foreign matter capturing system according to a comparative embodiment with respect to the first exemplary embodiment of the present disclosure;
Fig. 9 is a configuration view showing a foreign matter capturing system according to a second exemplary embodiment of the present disclosure; and
Fig. 10 is a configuration view showing a foreign matter capturing system according to a third exemplary embodiment of the present disclosure.

### DETAILED DESCRIPTION OF THE INVENTION

### <First Exemplary Embodiment>

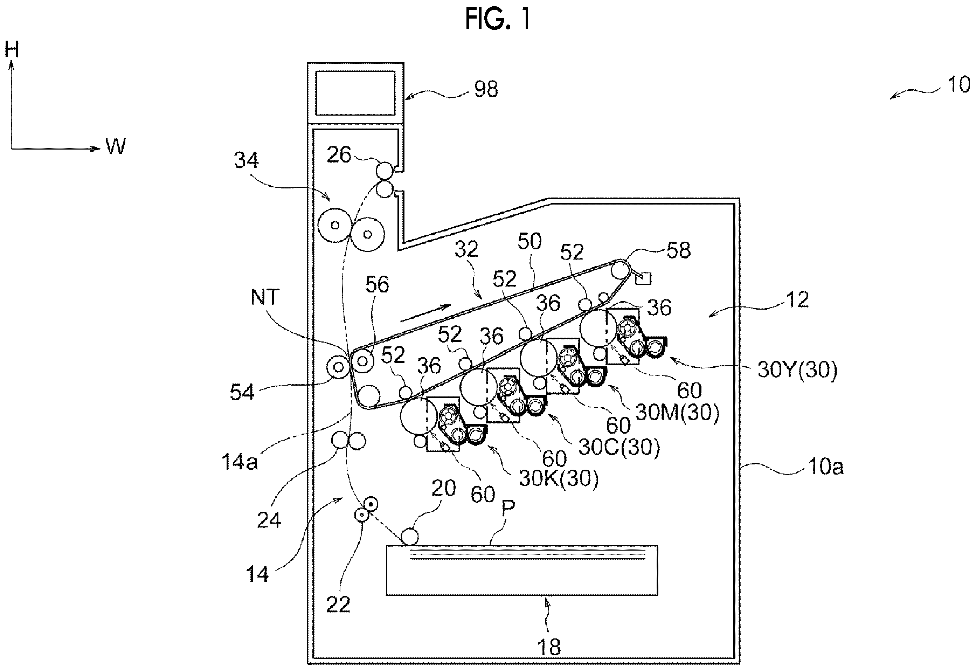

An example of a foreign matter capturing system and an image forming apparatus according to a first exemplary embodiment of the present disclosure will be described with reference to Figs.1 to 8. An arrow H shown in each drawing indicates an up-down direction of the image forming apparatus, which is a vertical direction. An arrow W is orthogonal to the arrow H and indicates a width direction of the image forming apparatus, which is a horizontal direction. An arrow D is orthogonal to the arrow H and the arrow W and indicates a depth direction of the image forming apparatus which is a horizontal direction.

### (Overall Configuration of Image Forming Apparatus 10)

As shown in Fig. 1, an image forming apparatus 10 includes an image forming unit 12 that forms a toner image and a transport unit 14 that transports a sheet member P along a transport path 14a. In addition, the image forming apparatus 10 includes an accommodation member 18 that accommodates the sheet member P and a foreign matter capturing system 60 that captures a toner scattered in a housing 10a. The sheet member P is an example of a recording medium.

In this configuration, in the image forming apparatus 10, the sheet member P accommodated in the accommodation member 18 is transported by the transport unit 14 along the transport path 14a. Further, a toner image is formed by the image forming unit 12 using a toner. In addition, the toner image is formed on the transported sheet member P, and the sheet member P on which the toner image is formed is discharged to the outside of the housing 10a.

### [Image Forming Unit 12]

As shown in Fig. 1, the image forming unit 12 includes a toner image forming unit 30, a transfer unit 32, and a fixing device 34. A plurality of toner image forming units 30 are provided, and toner images of respective colors are formed by the plurality of toner image forming units 30. The transfer unit 32 transfers the toner images formed by the toner image forming units 30 onto the sheet member P. The fixing device 34 fixes the toner images transferred to the sheet member P by the transfer unit 32 to the sheet member P.

### -Toner Image Forming Unit 30-

The plurality of toner image forming units 30 are provided to form a toner image for each color. In the present exemplary embodiment, in total, four colors of yellow (Y), magenta (M), cyan (C), and black (K) toner image forming units 30Y, 30M, 30C, and 30K are provided. In the following description, in a case where it is not necessary to distinguish between yellow (Y), magenta (M), cyan (C), and black (K), Y, M, C, and K attached to the reference symbols are omitted.

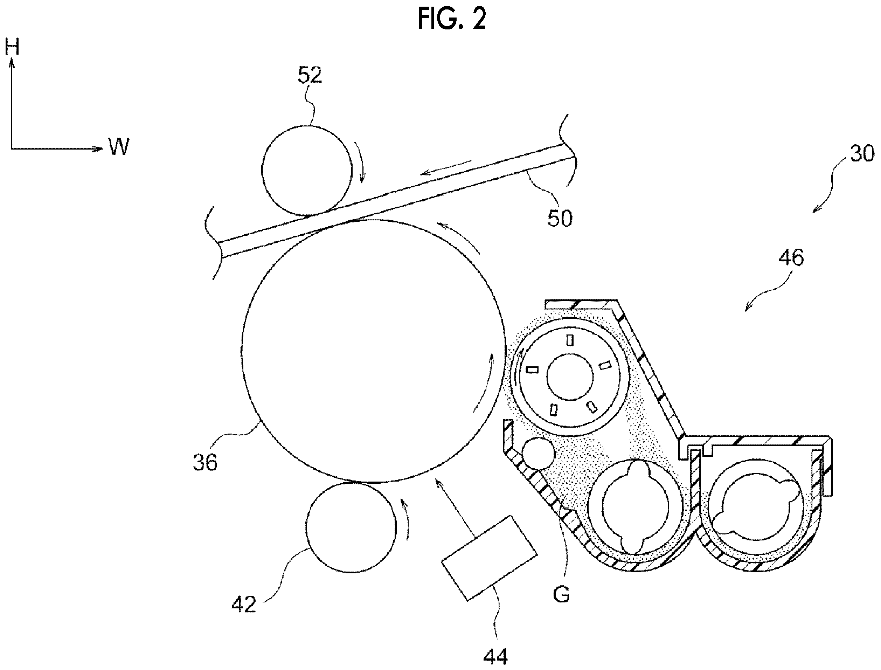

The toner image forming unit 30 of each color is basically configured the same except for a toner to be used. As shown in Fig. 2, the toner image forming unit 30 includes a rotating columnar image holder 36 and a charger 42 that charges the image holder 36. Further, the toner image forming unit 30 includes an exposure device 44 that irradiates the charged image holder 36 with exposure light to form an electrostatic latent image and a developing device 46 that develops the electrostatic latent image with a developer G containing a toner as a toner image. Accordingly, the toner image forming unit 30 of each color forms an image of each color using a toner of each color.

In addition, as shown in Fig. 1, the image holder 36 of each color is in contact with a transfer belt 50 (details to be described later) that moves circumferentially. In a circumferential direction (see an arrow in the drawing) of the transfer belt 50, the yellow (Y), magenta (M), cyan (C), and black (K) toner image forming units 30 are arranged in this order from an upstream side.

### -Transfer Unit 32-

As shown in Fig. 1, the transfer unit 32 includes the transfer belt 50 and primary transfer rolls 52 that are each arranged on an opposite side of the image holder 36 of each color with the transfer belt 50 sandwiched therebetween. The primary transfer roll 52 transfers the toner image formed on the image holder 36 of each color to the transfer belt 50.

In addition, the transfer unit 32 includes a winding roll 56 around which the transfer belt 50 is wound and a drive roll 58 around which the transfer belt 50 is wound and which transmits a rotational force to the transfer belt 50. Accordingly, the transfer belt 50 moves circumferentially in an arrow direction in the drawing.

Further, the transfer unit 32 includes a secondary transfer roll 54 arranged on an opposite side of the winding roll 56 with the transfer belt 50 sandwiched therebetween. The secondary transfer roll 54 transfers a toner image transferred to the transfer belt 50 to the sheet member P. A transfer nip NT where the toner image is transferred to the sheet member P is formed between the secondary transfer roll 54 and the transfer belt 50.

In this configuration, the toner image is primarily transferred to the transfer belt 50 by the primary transfer roll 52 in order of yellow (Y), magenta (M), cyan (C), and black (K). In addition, the toner image is transferred from the transfer belt 50 to the sheet member P, which is sandwiched between the transfer belt 50 and the secondary transfer roll 54 and is transported, by the secondary transfer roll 54. Further, the sheet member P to which the toner image is transferred is transported toward the fixing device 34.

### -Fixing Device 34-

As shown in Fig. 1, the fixing device 34 is arranged on a downstream side of the transfer nip NT in a transport direction of the sheet member P. The fixing device 34 heats and pressurizes a toner image transferred to the sheet member P to fix the toner image to the sheet member P.

### [Transport Unit 14]

As shown in Fig. 1, the transport unit 14 includes a feeding roll 20 that feeds the sheet member P accommodated in the accommodation member 18 to the transport path 14a. Further, the transport unit 14 includes a prevention roll 22 that prevents double-feeding of the sheet member P fed by the feeding roll 20. Further, the transport unit 14 includes an adjustment roll 24 that adjusts a timing of the sheet member P being fed to the transfer nip NT. In addition, the transport unit 14 includes a discharge roll 26 that discharges the sheet member P to which a toner image is fixed by the fixing device 34 to the outside of the housing 10a.

### [Foreign Matter Capturing System 60]

The foreign matter capturing system 60 is provided in each color toner image forming unit 30. The foreign matter capturing system 60 is arranged to capture a toner that is scattered in the housing 10a in a case where the developing device 46 develops an electrostatic latent image as a toner image with the developer G. The configurations of the respective foreign matter capturing systems 60 are the same. Details of the foreign matter capturing system 60 will be described later.

### (Major Portion Configuration)

Next, a configuration of the foreign matter capturing system 60 will be specifically described. The foreign matter capturing system 60 is arranged on a back side in the depth direction with respect to the toner image forming unit 30 to capture a toner that is scattered in the housing 10a. A toner is an example of a foreign matter.

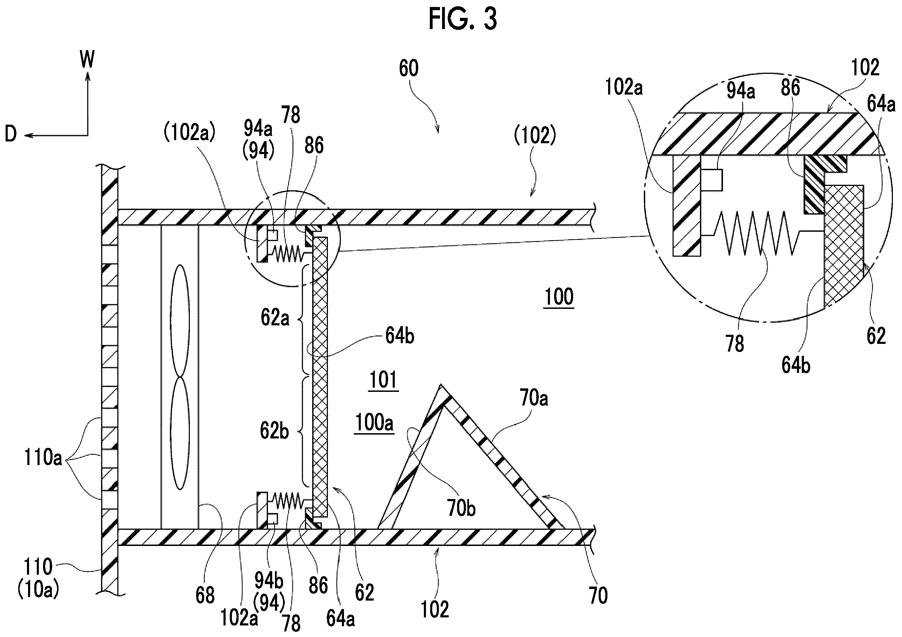

As shown in Fig. 1, the foreign matter capturing system 60 is arranged on the back side in the depth direction with respect to the toner image forming unit 30 and on a front side in the depth direction with respect to a rear surface plate 110 of the housing 10a as shown in Fig. 3.

The foreign matter capturing system 60 includes a filter 62, a fan 68, a guide member 70, an elastic member 78, a seal member 86, a detection member 94, and a user interface 98 (see Fig. 1).

### [Filter 62 and Seal Member 86]

As shown in Fig. 3, the filter 62 is arranged in an air flow passage 100 in which air flows and captures a toner from the flowing air. The air flow passage 100 is formed inside a wall plate 102 having a rectangular tubular cross section and extends in the depth direction so that air flows in the depth direction. The air is an example of a gas. The air flow passage 100 is an example of a gas flow passage. The depth direction is an example of a flow direction of a gas.

The filter 62 has a plate shape of which a thickness direction is the depth direction and has a rectangular shape as viewed from the depth direction. Further, a gap is formed between the filter 62 and the wall plate 102, and the seal member 86 is provided in order to prevent air from leaking from the gap.

The seal member 86 is formed of an elastically deformable foam material and is arranged to surround the filter 62 from a peripheral direction of the filter 62 as shown in Fig. 3. The seal member 86 has an L-shaped cross section, one side of the seal member 86 is attached to the wall plate 102, and the other side of the seal member 86 is in contact with a back surface 64b of the filter 62, which faces the back side in the depth direction.

### [Fan 68]

As shown in Fig. 3, the fan 68 is arranged between the filter 62 and the rear surface plate 110 in the air flow passage 100.

**In** this configuration, as the fan 68 is operated, air flows from the front (a right side in the drawing) to the back side (a left side in the drawing) in the depth direction. Then, the flowing air is discharged to the outside of the housing 10a from a plurality of through-holes 110a formed in the rear surface plate 110.

### [Elastic member 78 and Detection Member 94]

The elastic member 78 is an elastically deformable compression coil spring and is provided at each of four corners of the filter 62. Specifically, the elastic member 78 is arranged to extend in the depth direction as shown in Fig. 3. One end of the elastic member 78 is attached to the back surface 64b of the filter 62, and the other end of the elastic member 78 is attached to a protrusion 102a that protrudes from the wall plate 102 toward an air flow passage 100 side.

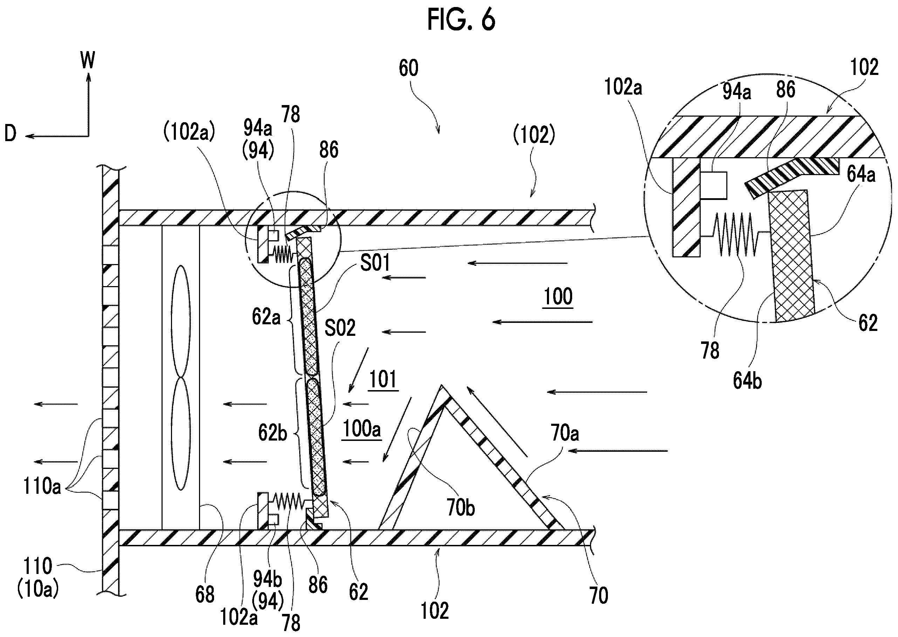

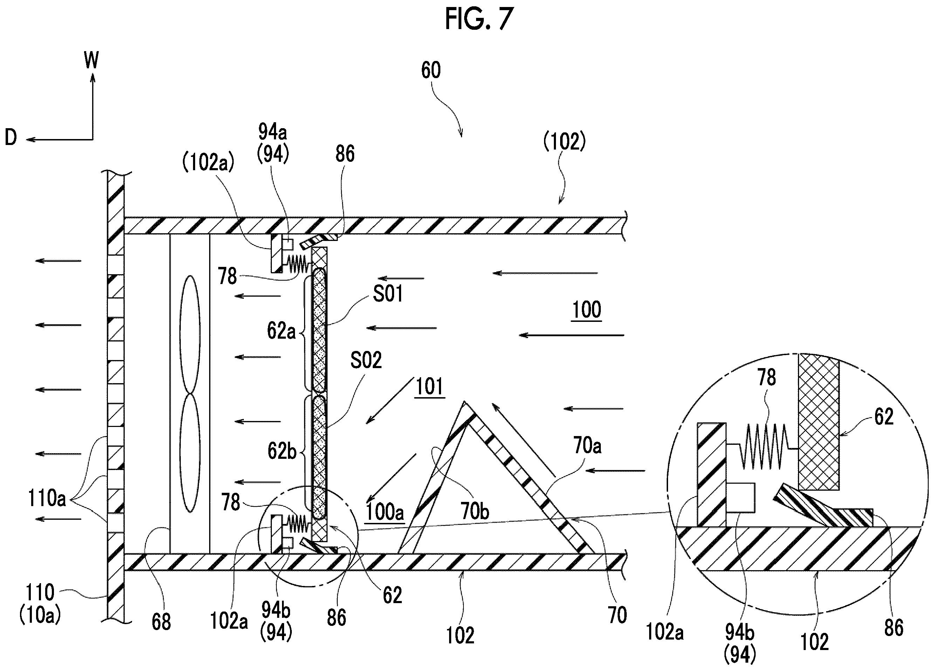

The detection members 94 are optical sensors, and a plurality of detection members 94 are provided. Specifically, as shown in Fig. 3, the detection members 94 are respectively disposed on a wall plate 102 side with respect to the elastic members 78. Tips of the detection members 94 face a seal member 86 side. Accordingly, the detection members 94 detect that the elastic members 78 are elastically deformed and an end portion of the filter 62 is moved in the depth direction via the seal member 86 (see Figs.6 and 7).

For convenience of description, in some cases, the detection member 94 arranged on one side (an upper side in the drawing) in the width direction will be referred to as a detection member 94a, and the detection member 94 disposed on the other side (a lower side in the drawing) in the width direction will be referred to as a detection member 94b. The detection member 94b is an example of a detection unit. The detection member 94a is an example of another detection unit.

In this configuration, the detection member 94a detects movement of one side (the upper side in the drawing) portion 62a of the filter 62 in the width direction intersecting the depth direction in the depth direction. In addition, the detection member 94b detects movement of the other side (the lower side in the drawing) portion 62b of the filter 62 in the width direction in the depth direction.

### [Guide Member 70]

As shown in Fig. 3, the guide member 70 is arranged in the air flow passage 100 on the upstream side in the flow direction of air with respect to the filter 62. In other words, the guide member 70 is arranged in the air flow passage 100 on the front side in the depth direction with respect to the filter 62. The depth direction is an example of the flow direction of air.

The guide member 70 guides air to the one side (the upper side in the drawing) portion 62a of the filter 62 in the width direction intersecting the depth direction. The width direction is an example of an intersection direction.

Specifically, a guide surface 70a that guides air to the one side portion 62a of the filter 62 by being inclined with respect to the depth direction is formed at a portion of the guide member 70 on the front side in the depth direction.

In addition, a guide surface 70b that guides air from the one side portion 62a toward the other side portion 62b of the filter 62 by being inclined with respect to the width direction is formed at a portion of the guide member 70 on the back side in the depth direction. The guide surface 70b is an example of another guide surface.

### [User Interface 98]

As shown in Fig. 1, the user interface 98 is attached to an upper portion of the image forming apparatus 10 and notifies that a time for replacing the filter 62 has come. The user interface 98 is an example of a notification unit.

### (Action)

Next, action of the foreign matter capturing system 60 will be described. The action of the foreign matter capturing system 60 will be described while comparing with a foreign matter capturing system 360 according to a comparative embodiment. First, a configuration of the foreign matter capturing system 360 according to the comparative embodiment will be described largely focusing on differences from the foreign matter capturing system 60 according to the present exemplary embodiment.

### [Configuration of Foreign Matter Capturing System 360]

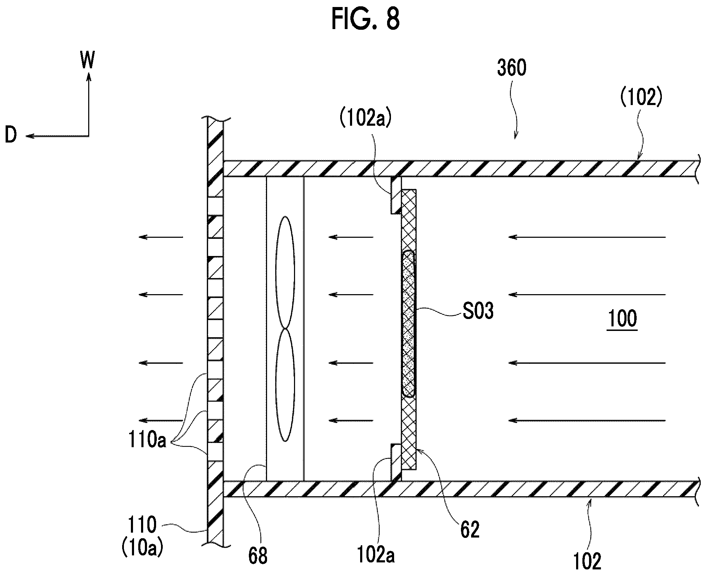

In the foreign matter capturing system 360 according to the comparative embodiment, as shown in Fig. 8, the guide member is not provided in the air flow passage 100. In addition, the filter 62 is directly attached to the protrusion 102a protruding from the wall plate 102. Further, the foreign matter capturing system 360 is not provided with the elastic member, the detection member, and the seal.

### [Action of Foreign Matter Capturing Systems 60 and 360]

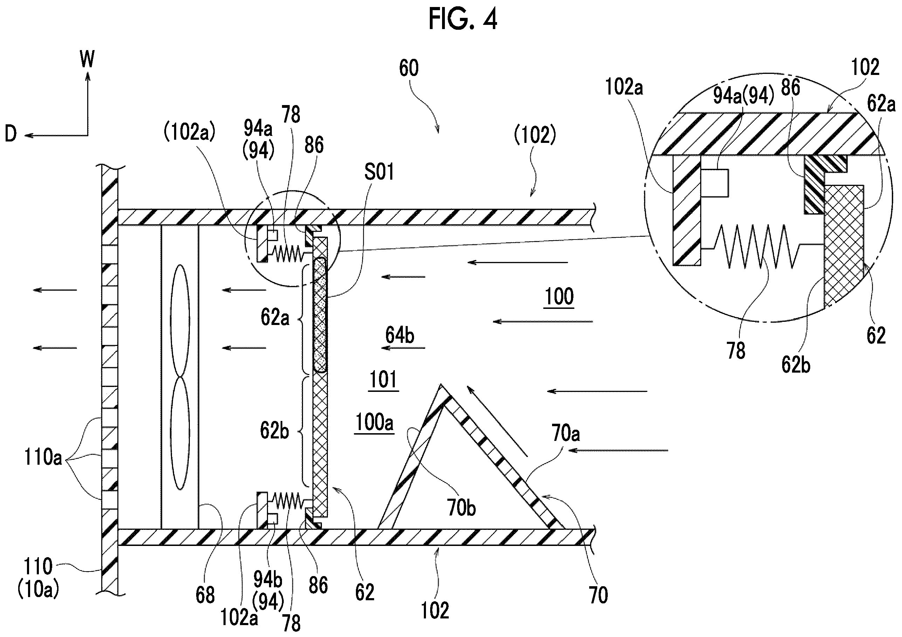

In an initial state of the filter 62, the filter 62 does not capture a foreign matter such as a toner. In this state, in a case where the fan 68 is operated, as shown in Figs.4 and 8, air containing a foreign matter such as a toner flows in the air flow passage 100 from the toner image forming unit 30 (see Fig. 1) to the back side in the depth direction.

Herein, in the foreign matter capturing system 60, as shown in Fig. 4, air flowing toward the one side portion 62a of the filter 62 passes through the one side portion 62a of the filter 62 without changing the flow direction. On the other hand, air flowing toward the other side portion 62b of the filter 62 is guided to the one side portion 62a of the filter 62 by the guide surface 70a of the guide member 70. Then, the air guided to the one side portion 62a of the filter 62 passes through the one side portion 62a of the filter 62. Accordingly, a foreign matter such as a toner is captured by the one side portion 62a of the filter 62 (S01 in the drawing). In addition, the air in which the foreign matter such as the toner is captured is discharged from the through-holes 110a to the outside of the housing 10a.

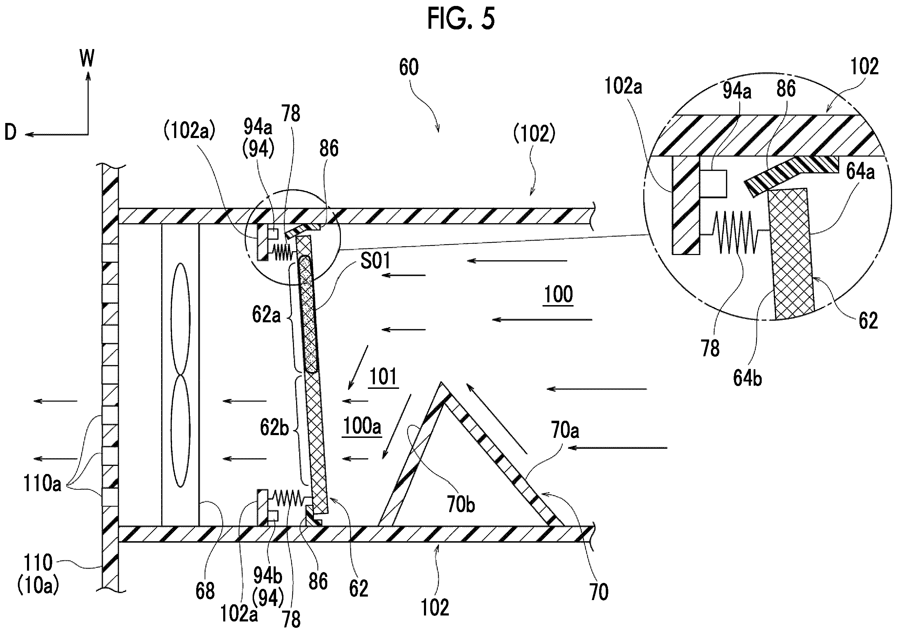

In a case where a foreign matter is captured in the one side portion 62a of the filter 62, resistance to air that is to pass through the one side portion 62a of the filter 62 increases. Accordingly, as shown in Fig. 5, the one side portion 62a of the filter 62 is pressed by the flowing air, and the elastic member 78 on the one side in the width direction is elastically deformed. Then, the one side portion 62a of the filter 62 is moved to the back side in the depth direction. Accordingly, the filter 62 is inclined with respect to the width direction.

The detection member 94a detects that the one side portion 62a of the filter 62 is pressed to the back side in the depth direction (the downstream side in the flow direction of air) by pressing the one side portion 62a of the filter 62.

In addition, as the filter 62 is inclined with respect to the width direction, an inlet 101 for air flowing from the one side portion 62a to the other side portion 62b of the filter 62 is widened. In other words, in a flow passage portion 100a in which air flows from the one side portion 62a to the other side portion 62b of the filter 62, an upstream portion in the flow direction of air is wider than a downstream portion.

Accordingly, air flowing toward the one side portion 62a of the filter 62 is guided to the guide surface 70b of the guide member 70 and flows toward the other side portion 62b of the filter 62. Then, the air flowing toward the other side portion 62b of the filter 62 passes through the other side portion 62b of the filter 62.

Accordingly, as shown in Fig. 6, a foreign matter such as a toner is captured by the other side portion 62b of the filter 62 (S02 in the drawing). Then, the air in which the foreign matter such as the toner is captured is discharged from the through-holes 110a to the outside of the housing 10a.

In a case where a foreign matter is captured in the other side portion 62b of the filter 62, resistance to air that is to pass through the other side portion 62b of the filter 62 increases. Accordingly, as shown in Fig. 7, the other side portion 62b of the filter 62 is pressed by the flowing air, and the elastic member 78 on the other side in the width direction is elastically deformed. Then, the other side portion 62b of the filter 62 is moved to the back side in the depth direction. Accordingly, the entire filter 62 is moved to the back side in the depth direction.

In addition, the detection member 94b detects that the other side portion 62b of the filter 62 is pressed to the back side in the depth direction (the downstream side in the flow direction of air) by pressing the other side portion 62b of the filter 62.

As described above, in a case where a foreign matter such as a toner is captured by the one side portion 62a of the filter 62 and the other side portion 62b of the filter 62, the detection members 94a and 94b detect movement of the filter 62. In other words, in a case where the foreign matter such as the toner is captured by the entire filter 62, the detection members 94a and 94b detect the movement of the filter 62.

In a case where the detection members 94a and 94b detect movement of the filter 62, the user interface 98 attached to the upper portion of the image forming apparatus 10 shown in Fig. 1 notifies that a time for replacing the filter 62 has come.

On the other hand, in the foreign matter capturing system 360 according to the comparative embodiment, as shown in Fig. 8, air flowing toward the filter 62 passes through the entire filter 62 without changing the flow direction. That is, the air flow passage 100 is formed such that the air hits the entire filter 62 without changing the flow direction.

Accordingly, a foreign matter such as a toner is largely captured by a central portion of the filter 62 (S03 in the drawing). In other words, a position of the foreign matter captured by the filter 62 is biased toward the central portion.

### (Summary)

As described above, in the foreign matter capturing system 60, a foreign matter such as a toner is captured by the entire filter 62. On the other hand, in the foreign matter capturing system 360 according to the comparative embodiment, a position of the foreign matter such as the toner captured by the filter 62 is biased toward the central portion. Accordingly, in the foreign matter capturing system 60, the bias of the position of the foreign matter such as the toner captured by the filter 62 is suppressed compared to the foreign matter capturing system 360 according to the comparative embodiment.

In addition, in the foreign matter capturing system 60, as the elastic member 78 on the one side in the width direction is elastically deformed, the upstream portion of the flow passage portion 100a, in which the air flows from the one side portion 62a to the other side portion 62b of the filter 62, in the flow direction of air is wider than the downstream portion (see Fig. 5). As described above, the upstream portion of the flow passage portion 100a in the flow direction of air is wider than the downstream portion without applying a rotational force to the filter.

In addition, in the foreign matter capturing system 60, the guide surface 70a that is inclined with respect to the flow direction of air to guide the air to the one side portion 62a of the filter 62 is formed at a portion of the guide member 70 on the upstream side in the flow direction of air. Accordingly, a large amount of air is guided to the one side portion 62a of the filter 62 compared to a case where the portion of the guide member on the upstream side in the flow direction of air is aligned with the flow direction of air.

In addition, in the foreign matter capturing system 60, the guide surface 70b that guides air from the one side portion 62a toward the other side portion 62b of the filter 62 by being inclined with respect to the width direction is formed at a portion of the guide member 70 on the downstream side in the flow direction of air. For this reason, a large amount of air is guided from the one side portion 62a to the other side portion 62b of the filter 62 compared to a case where the portion of the guide member 70 on the downstream side in the flow direction of air is aligned with the width direction.

In addition, in the foreign matter capturing system 60, the user interface 98 notifies that a time for replacing the filter 62 has come based on detection results of the detection member 94a and the detection member 94b. Accordingly, the time for replacing the filter 62 is accurately notified compared to a case where the time for replacing the filter is notified only by the detection result of the detection member 94b that detects movement of the other side portion 62b of the filter 62 in the depth direction.

In addition, as the foreign matter capturing system 60 is included in the image forming apparatus 10, the amount of foreign matter such as a toner removed from the inside of the housing 10a by one filter 62 is increased compared to a case where the foreign matter capturing system 360 according to the comparative embodiment is included.

### <Second Exemplary Embodiment>

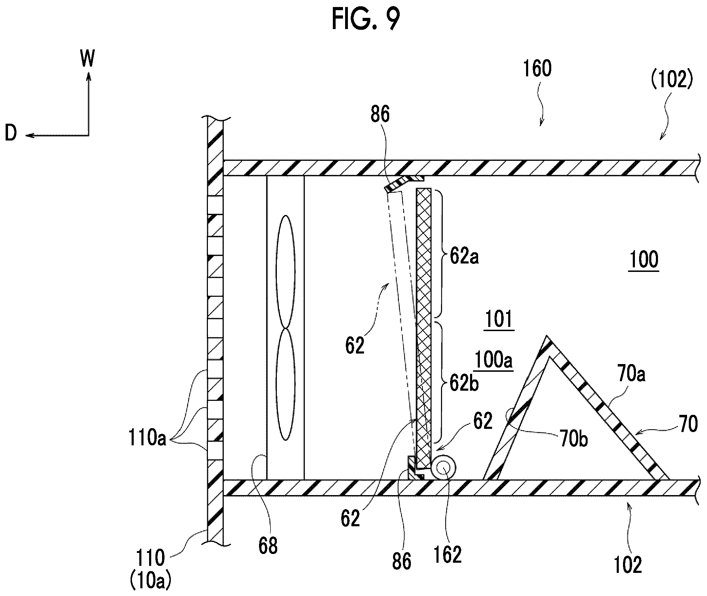

An example of a foreign matter capturing system according to a second exemplary embodiment of the present disclosure will be described with reference to Fig. 9. The second exemplary embodiment will be described largely focusing on differences from the first exemplary embodiment.

As shown in Fig. 9, a foreign matter capturing system 160 according to the second exemplary embodiment includes the filter 62 and a shaft portion 162 that is a shaft for rotating the filter 62. The shaft portion 162 is arranged on the other side of the filter 62 in the width direction, and an axial direction of the shaft portion 162 is the up-down direction. The foreign matter capturing system 160 is not provided with the elastic member and the detection member.

In this configuration, in a case where a foreign matter such as a toner is captured in the one side portion 62a of the filter 62 (solid line) of which the thickness direction is the depth direction, the filter 62 is rotated around the shaft portion 162 manually or automatically. Then, as shown by a two-dot chain line in the drawing, the filter 62 is inclined with respect to the width direction. As described above, the filter 62 is moved such that the upstream portion of the flow passage portion 100a, in which air flows from the one side portion 62a toward the other side portion 62b of the filter 62, in the flow direction of air is wider than the downstream portion. The shaft portion 162 is an example of a moving member that allows the filter 62 to be movable.

### <Third Exemplary Embodiment>

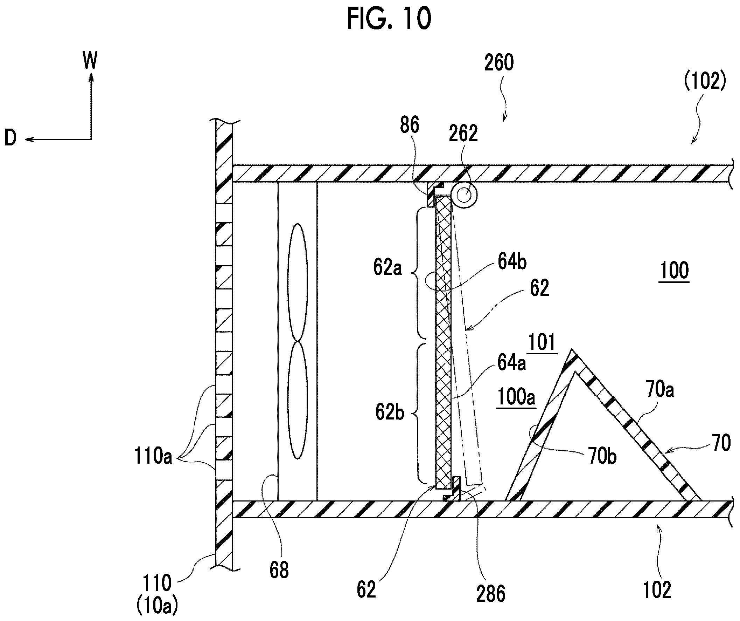

An example of a foreign matter capturing system according to a third exemplary embodiment of the present disclosure will be described with reference to Fig. 10. The third exemplary embodiment will be described largely focusing on differences from the first exemplary embodiment.

As shown in Fig. 10, a foreign matter capturing system 260 according to the third exemplary embodiment includes the filter 62 and a shaft portion 262 that is a shaft for rotating the filter 62. The shaft portion 262 is arranged on the one side of the filter 62 in the width direction, and an axial direction of the shaft portion 262 is the up-down direction. **In** addition, one side of a seal member 286 having an L-shaped cross section on the other side in the width direction is attached to the wall plate 102, and the other side of the seal member 286 is in contact with a front surface 64a of the filter 62, which faces the front side in the depth direction.

In this configuration, in a case where a foreign matter such as toner is captured in the one side portion 62a of the filter 62 (solid line) of which the thickness direction is the depth direction, the filter 62 is rotated around the shaft portion 262 manually or automatically. Then, as shown by a two-dot chain line in the drawing, the filter 62 is inclined with respect to the width direction. In this manner, the filter 62 is moved such that the upstream portion of the flow passage portion 100a, in which air flows from the one side portion 62a toward the other side portion 62b of the filter 62, in the flow direction of air is wider than the downstream portion. The shaft portion 262 is an example of the moving member that allows the filter 62 to be movable.

Although details of certain exemplary embodiments of the present disclosure have been described, the present disclosure is not limited to such exemplary embodiments, and it is clear for those skilled in the art that the present disclosure can take other various exemplary embodiments within the scope of the present disclosure. **In** the exemplary embodiments, the filter 62 has a rectangular shape, but for example, the filter may have another shape such as a circular shape.

In addition, the intersection direction intersecting the flow direction of air is the width direction in the exemplary embodiments, but for example, the intersection direction may be the up-down direction or the like.

In addition, a time for replacing the filter 62 is notified based on detection results of the detection member 94a that detects movement of the one side portion 62a of the filter 62 and the detection member 94b that detects movement of the other side portion 62b of the filter 62 in the exemplary embodiments. However, a time for replacing the filter 62 may be notified based only on the detection result of the detection member 94b that detects the movement of the other side portion 62b of the filter 62. In addition, after a foreign matter such as a toner is captured by the one side portion 62a and the other side portion 62b of the filter 62, the time for replacing the filter 62 is notified.

In addition, in the exemplary embodiments, although not particularly described, the user interface of the image forming apparatus 10 may also serve as the user interface of the foreign matter capturing systems 60, 160, and 260.
(((1))) A foreign matter capturing system comprising:
   a filter that is arranged in a gas flow passage in which a gas flows and that captures a foreign matter from the flowing gas;
   a guide member that is arranged in the gas flow passage on an upstream side in a flow direction of the gas with respect to the filter and that guides a gas to one side portion of the filter in an intersection direction intersecting the flow direction of the gas; and
   a moving member that is capable of moving the filter such that an upstream portion of a flow passage portion, in which the gas flows from the one side portion toward the other side portion of the filter, in the flow direction of the gas is wider than a downstream portion.
(((2))) The foreign matter capturing system according to (((1))),
   wherein the moving member is an elastic member that is capable of elastically deforming in the flow direction of a gas.
(((3))) The foreign matter capturing system according to (((1))) or (((2))),
   wherein a guide surface that guides the gas to the one side portion of the filter by being inclined with respect to the flow direction of the gas is formed at a portion of the guide member on the upstream side in the flow direction of the gas.
(((4))) The foreign matter capturing system according to any one of (((1))) to (((3))),
   wherein another guide surface that guides the gas from the one side portion of the filter toward the other side portion by being inclined with respect to the intersection direction is formed at a portion of the guide member on a downstream side in the flow direction of the gas.
(((5))) The foreign matter capturing system according to any one of (((1))) to (((4))), further comprising:
   a detection unit that detects movement of the other side portion of the filter; and
   a notification unit that issues a notification of replacement of the filter based on a detection result in which the movement is detected by at least the detection unit.
(((6))) The foreign matter capturing system according to (((5))), further comprising:
   another detection unit that detects movement of the one side portion of the filter,
   wherein the notification unit issues the notification of replacement of the filter based on the detection result in which the movement is detected by the detection unit and a detection result in which the movement is detected by the other detection unit.
(((7))) An image forming apparatus comprising:
   an image forming unit that forms an image on a transported recording medium; and
   the foreign matter capturing system according to any one of (((1))) to (((6))) that captures a foreign matter from a gas flowing from the image forming unit.

In the foreign matter capturing system according to (((1))), bias of the position of the foreign matter captured by the filter can be suppressed compared to a case where the gas flow passage is formed such that the gas hits the entire filter without changing the flow direction of a gas.

In the foreign matter capturing system according to (((2))), the filter can be moved such that then the upstream portion of the flow passage portion in the flow direction of a gas is wider than the downstream portion without applying a rotational force to the filter.

In the foreign matter capturing system according to (((3))), a large amount of gas can be guided to the one side portion of the filter compared to a case where the portion of the guide member on the upstream side in the flow direction of a gas is aligned with the flow direction of a gas.

In the foreign matter capturing system according to (((4))), a large amount of gas can be guided from the one side portion to the other side portion of the filter compared to a case where the portion of the guide member on the downstream side in the flow direction of a gas is aligned with the intersection direction.

In the foreign matter capturing system according to (((5))), a time for replacing the filter can be notified after the foreign matter is captured by the one side portion and the other side portion of the filter.

In the foreign matter capturing system according to (((6))), a time for replacing the filter can be accurately notified compared to a case where the time for replacing the filter is notified based on only movement of the other side portion of the filter.

In the image forming apparatus according to (((7))), the amount of foreign matter removed from the inside of the housing by one filter can be increased compared to a case where the foreign matter capturing system in which the gas flow passage is formed such that a gas hits the entire filter without changing the flow direction is included.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
12: image forming unit
60: foreign matter capturing system
62: filter
62a: one side portion
62b: other side portion
68: fan
70: guide member
70a: guide surface
70b: guide surface (example of other guide surface)
78: elastic member
94: detection member
94a: detection member (example of other detection unit)
94b: detection member (example of detection unit)
98: user interface (example of notification unit)
100: air flow passage (example of gas flow passage)
100a: flow passage portion
160: foreign matter capturing system
162: shaft portion (example of moving member)
260: foreign matter capturing system
262: shaft portion (example of moving member)

## Claims

1. A foreign matter capturing system comprising:
a filter that is arranged in a gas flow passage in which a gas flows and that captures a foreign matter from the flowing gas;
a guide member that is arranged in the gas flow passage on an upstream side in a flow direction of the gas with respect to the filter and that guides a gas to one side portion of the filter in an intersection direction intersecting the flow direction of the gas; and
a moving member that is capable of moving the filter such that an upstream portion of a flow passage portion, in which the gas flows from the one side portion toward the other side portion of the filter, in the flow direction of the gas is wider than a downstream portion.

2. The foreign matter capturing system according to claim 1,
wherein the moving member is an elastic member that is capable of elastically deforming in the flow direction of a gas.

3. The foreign matter capturing system according to claim 1 or 2,
wherein a guide surface that guides the gas to the one side portion of the filter by being inclined with respect to the flow direction of the gas is formed at a portion of the guide member on the upstream side in the flow direction of the gas.

4. The foreign matter capturing system according to any one of claims 1 to 3,
wherein another guide surface that guides the gas from the one side portion of the filter toward the other side portion by being inclined with respect to the intersection direction is formed at a portion of the guide member on a downstream side in the flow direction of the gas.

5. The foreign matter capturing system according to any one of claims 1 to 4, further comprising:
a detection unit that detects movement of the other side portion of the filter; and
a notification unit that issues a notification of replacement of the filter based on a detection result in which the movement is detected by at least the detection unit.

6. The foreign matter capturing system according to claim 5, further comprising:
another detection unit that detects movement of the one side portion of the filter,
wherein the notification unit issues the notification of replacement of the filter based on the detection result in which the movement is detected by the detection unit and a detection result in which the movement is detected by the other detection unit.

7. An image forming apparatus comprising:
an image forming unit that forms an image on a transported recording medium; and
the foreign matter capturing system according to any one of claims 1 to 6 that captures a foreign matter from a gas flowing from the image forming unit.
